# EUROPÄISCHE PATENTANMELDUNG

(11) **EP 4 369 429 A1**
(43) Veröffentlichungstag der Anmeldung: **15.05.2024**
(21) Anmeldenummer: 23207481.5
(22) Anmeldetag: 02.11.2023
(51) Int. Cl.: H01M 4/04, B22F 3/18

(54) **VERFAHREN UND VORRICHTUNG ZUR HERSTELLUNG EINES TROCKENFILMS**

(30) Priorität: 11.11.2022 DE 102022211993
(71) Anmelder: VOLKSWAGEN AG, 38440 Wolfsburg (DE)
(72) Erfinder: BUßWINKEL, Ludger, 38106 Braunschweig (DE); REUBER, Sebastian, 01099 Dresden (DE); SCHMIDT-LOBACH, Roland, 39356 Hörsingen (DE); SCHOPF, Sven, 38116 Braunschweig (DE)
(74) Vertreter: FDST Patentanwälte

(57) **Zusammenfassung**

Die Erfindung betrifft eine Vorrichtung (2) zur Herstellung eines Trockenfilms (4), insbesondere einer Elektrodenschicht. Die umfasst eine Walzeneinrichtung (6) mit einer ersten Walze (8) und mit einer zweiten Walze (10) zur Bildung des Trockenfilms (4) aus einer Trockenfilmmaterialvorlage (26), sowie ein Rakel (14), welches zum Einstellen einer Höhe (h) der Trockenfilmmaterialvorlage (26) verfahrbar ist. Des Weiteren betrifft die Erfindung ein Verfahren zur Herstellung eines Trockenfilms (4), insbesondere anhand der Vorrichtung (2).

## Beschreibung

Die Erfindung betrifft eine Vorrichtung sowie ein Verfahren zur Herstellung eines Trockenfilms, insbesondere einer Elektrodenschicht.

Zur Herstellung eines Trockenfilms wird, wie beispielsweise aus der WO 2018/210723 A1 bekannt ist, ein Trockenfilmmaterial anhand eines Pulverförderers zwischen zwei Walzen einer Walzenvorrichtung gefördert wird. Anhand dieser Walzen werden Druck- und/oder Scherkräfte in das Trockenfilmmaterial eingeleitet, so dass sich der Trockenfilm bildet.

Für möglichst homogene Eigenschaften des Trockenfilms sollte das Trockenfilmmaterial hierbei entsprechend gleichmäßig im Spalt zwischen den Walzen verteilt sein. Beispielsweise wird das Trockenfilmmaterial hierzu räumlich und zeitlich gleichmäßig zwischen die Walzen gefördert.

Der Erfindung liegt die Aufgabe zugrunde, ein besonders geeignetes Verfahren und/oder eine besonders geeignete Vorrichtung zur Herstellung eines Trockenfilms anzugeben. Insbesondere soll dabei eine Homogenität des hergestellten Trockenfilms verbessert werden.

Bezüglich der Vorrichtung wird die Aufgabe erfindungsgemäß gelöst durch die Merkmale des Anspruchs 1. Hinsichtlich des Verfahrens wird die Aufgabe mit den Merkmalen des Anspruchs 9 erfindungs-gemäß gelöst. Vorteilhafte Ausgestaltungen und Weiterbildungen sind Gegenstand der Unteransprüche. Dabei gelten die Ausführungen im Zusammenhang mit der Vorrichtung sinngemäß auch für das Verfahren und umgekehrt.

Die Vorrichtung ist zur Herstellung eines Trockenfilms aus Trockenfilmmaterial eingerichtet. Der Trockenfilm ist zweckmäßiger Weise eine Elektrodenschicht (ein Elektrodenfilm), insbesondere für eine Elektrode einer Lithium-Ionen-Batterie. Beispielsweise wird die Elektrodenschicht anschließend an deren Herstellung mittels der Vorrichtung mit einer Stromableiterfolie gefügt, beispielsweise mit dieser laminiert.

Das Trockenfilmmaterial ist dabei zweckmäßigerweise eine auch als Granulat bezeichnete granulare Materie, beispielsweise ein Pulver oder eine Pulvermischung.

Die Vorrichtung umfasst eine Walzeneinrichtung mit einer ersten Walze und mit einer zweiten Walze, die ein Walzenpaar bilden. Die Drehachsen der ersten Walze und der zweiten Walze erstrecken sich geeigneter Weise parallel zueinander, wobei die Richtung, in welcher sich die beiden Drehachsen erstrecken im Folgenden auch als Axialrichtung bezeichnet wird. Zwischen der ersten und der zweiten Walze ein Walzenspalt gebildet ist.

Die beiden Walzen dienen dabei der Bildung des Trockenfilms aus einer Trockenfilmmaterialvorlage. Hierzu wird auf das Trockenfilmmaterial der Trockenfilmmaterialvorlage anhand der Walzen bearbeitet, insbesondere wird eine Press- und/oder eine Scherkraft auf das Trockenfilmmaterials erzeugt, so dass sich die Partikel des Trockenfilmmaterials miteinander verbinden.

Im Zuge der Herstellung des Trockenfilms wird in den Walzenspalt das, insbesondere Lösungsmittelfreie, Trockenfilmmaterial gefördert, insbesondere geschüttet. Dieses sammelt sich im Walzenspalt vor dessen engster Stelle an. Also bildet sich ein Materialstau im Walzenspalt. Unter der Trockenfilmmaterialvorlage ist diese Ansammlung an Trockenfilmmaterial zu verstehen, welche im Walzenspalt angeordnet ist.

Des Weiteren umfasst die Erfindung ein Rakel. Dieses ist dazu eingerichtet die Höhe der Trockenfilmmaterialvorlage (Materialvorlage), mit anderen Worten dessen Ausdehnung in einer Richtung senkrecht zu derjenigen Ebene, welcher mittels der Drehachsen der ersten und der zweiten Walze aufgespannt ist, einzustellen. Hierzu ist das Rakel, bevorzugt automatisch, verfahrbar.

Anhand des Rakels ist es ermöglicht Trockenfilmmaterial der von der Trockenfilmmaterialvorlage zu entfernen, insbesondere abzustreifen. Dementsprechend weist die Trockenfilmmaterialvorlage eine definierte Höhe auf. Vorteilhaft ist auf diese Weise ist eine Vorverdichtung des Trockenfilmmaterial aufgrund einer vergleichsweise großen Höhe der Trockenfilmmaterialvorlage vermieden. Damit einhergehend ist zum einen eine Homogenität des hergestellten Trockenfilms, insbesondere dessen Dichte, besonders vorteilhaft erhöht. Zum anderen ist ein aufgrund mit dieser Vorverdichtung einhergehende Erhöhung des Drehmoments eines Walzenantriebs oder sogar eine Blockierung des Walzenantriebs vermieden.

Gemäß einer bevorzugten Ausgestaltung der Vorrichtung ist das Rakel in einer Richtung parallel zur Drehachsen der ersten Walze und/oder der zweiten Walze, also in Axialrichtung verfahrbar ist. Das anhand des Rakels entfernte Trockenfilmmaterial wird also zu den Enden der Walzen bezüglich der Axialrichtung gefördert. Beispielsweise ist axial endseitig der Walzen eine Auffangvorrichtung für das entferne Trockenfilmmaterial vorgesehen.

Vorzugsweise ist das Rakel derart ausgebildet, dass zumindest dessen spaltseitiges Ende im Walzenspalt, somit in einem Bereich zwischen der ersten und der zweiten Walze, verfahrbar. Somit kann und/oder wird eine definierte Höhe des Trockenfilmmaterials eingestellt werden, welche kleiner ist als der Radius der ersten und/oder der zweiten Walze.

Gemäß einer zweckmäßigen Ausgestaltung ist eine Verfahrgeschwindigkeit des Rakels einstellbar und/oder regelbar. Zusätzlich oder alternativ hierzu ist ein Abstand des Rakels zu den Walzen, insbesondere der auch als Rakelhöhe bezeichnete Abstand zwischen dem Rakel und der von den Drehachsen der Walzen aufgespannten Ebene, einstellbar. Vorzugsweise ist das Rakel gegen die Axialrichtung neigbar.

Vorteilhaft kann die Vorrichtung auf diese Weise für die Herstellung von Trockenfilmen mit unterschiedlichen Materialzusammensetzungen und/oder Dichten angepasst werden.

Gemäß einer vorteilhaften Weiterbildung ist jeweils ein Abschirmelement für die erste Walze und für die zweite Walze vorgesehen. Also ist der ersten Walze ein erstes der Abschirmelemente und der zweiten Walze ein zweites der Abschirmelemente zugeordnet. Die beiden Abschirmelemente sind dabei zwischen der ersten und der zweiten Walze, insbesondere im Walzenspalt, angeordnet. Vorzugsweise sind die Abschirmelemente im Umfangsbereich der jeweils zugeordneten Walze angeordnet. Die beiden Abschirmelemente sind zueinander beabstandet angeordnet. Der Bereich zwischen diesen bilden somit einen Aufnahmebereich für die Trockenfilmmaterialvorlage. Mit anderen Worten begrenzen die beiden Abschirmelemente denjenigen Bereich, in welchem sich das Trockenfilmmaterial ansammelt. Zweckmäßiger Weise reichen die beiden Abschirmelemente nicht bis zur engsten Stelle des Walzenspalts. Zweckmäßiger Weise sind die beiden Abschirmelemente feststehend, diese rotieren also nicht zusammen mit den Walzen.

Das Trockenfilmmaterial wird bei der Herstellung des Trockenfilms also in den Aufnahmebereich, insbesondere lediglich in den Aufnahmebereich gefördert.

Ein Kontakt des Trockenfilmmaterials in demjenigen Bereich des Walzenumfangs, in welchem das jeweilige Abschirmelement angeordnet ist, ist vermieden. Das Trockenfilmmaterial wird somit anhand der Walzen lediglich in einem definierten Bereich bearbeitet.

Zweckmäßigerweise verfährt das Rakel im Aufnahmebereich, also zwischen den beiden Abschirmelementen. Somit ist ein Kontakt zwischen dem Rakel und den Walzen und damit einhergehend eine Beschädigung des Rakels und/oder der Walzen vermieden.

Gemäß einer vorteilhaften Ausgestaltung weist die Vorrichtung eine Rütteleinheit für die Abschirmelemente auf. Diese dient dazu, die Abschirmelemente zu rütteln, insbesondere in Vibration zu versetzen, um ein unerwünschtes Haften des Trockenfilmmaterials an diesen zu vermeiden.

In geeigneter Ausgestaltung sind die Abschirmelemente in bauraumsparender Weise kreisbogenförmig ausgebildet, wobei diese zweckmäßig konzentrisch zur jeweiligen Walze angeordnet sind.

Gemäß einer zweckmäßigen Ausgestaltung sind die Abschirmelemente derart ausgebildet, dass deren einander zugewandten Seiten, also diejenigen Seiten, welche den Aufnahmebereich begrenzen, eben und/oder zueinander geneigt sind. Insbesondere weist der Aufnahmebereich in einer Ebene senkrecht zur Axialrichtung einen keilförmigen oder trapezförmigen Querschnitt auf. Allenfalls ist auf diese Weise ist die Gefahr des Haftens des Trockenfilmmaterials am jeweiligen Abschirmelement und/oder die Bildung einer sogenannten toten Zone, in welcher das Trockenfilmmaterial statisch verbleibt, vorteilhaft reduziert.

Vorzugsweise ist die den Walzen zugewandte Seite des jeweiligen Abschirmelements kreisbogenförmig ausgebildet und konzentrisch zur jeweils zugeordneten Walze angeordnet. Folglich ist ein unerwünschtes Eindringen von anhand des Rakels abgestreiften Materials zwischen das Abschirmelement und dem diesen zugeordneten Walze vermieden.

Gemäß einer geeigneten Ausgestaltung der Vorrichtung weisen die Abschirmelemente unterschiedliche Abstände zur mittels der durch die Drehachsen der ersten und der zweiten Walze aufgespannten (Mittel-)Ebene auf. Mit anderen Worten ist im Walzenspalt bei einer der Walzen derjenige Bereich, der vom dieser zugeordneten Abschirmelement nicht abgeschirmt, insbesondere abgedeckt, ist, größer als bei der anderen Walze. Somit sind die Abschirmelemente asymmetrisch im Walzenspalt angeordnet.

Sofern die Abschirmelemente kreisbogenförmig sind, sind beispielsweise die Mittelpunktswinkel der Abschirmelemente unterschiedlich groß.

Eine solche asymmetrischen Ausgestaltung kann, insbesondere je nach Zusammensetzung und/oder Ausgestaltung des Trockenfilmmaterials, in einem besseren Einzugsverhalten des Trockenfilmmaterials in den Walzenspalt resultieren. Weiterhin ist im Vergleich zur symmetrischen Ausgestaltung der Abschirmelemente aufgrund des größeren Abstands des entsprechenden Abschirmelements zur Mittelebene ein für dieses im Walzenspalt notwendiger Bauraum reduziert.

Insbesondere kann auf diese Weise eine Krafteinwirkung, insbesondere eine Scherkrafteinwirkung auf das Trockenfilmmaterial beeinflusst werden.

Ein weiterer Aspekt der Erfindung betrifft ein Verfahren zur Herstellung eines Trockenfilms, insbesondere einer Elektrodenschicht. Vorzugsweise wird hierzu eine Vorrichtung gemäß einer der oben dargestellten Varianten verwendet.

Verfahrensgemäß wird hierbei Trockenfilmmaterial, welches zweckmäßiger Weise eine granulare Materie ist, unter Bildung einer Trockenfilmmaterialvorlage zwischen die erste Walze und die zweite Walze gefördert, insbesondere geschüttet. Das Trockenfilmmaterial ist hierbei insbesondere lösungsmittelfreies und/oder trocken.

Weiterhin wird verfahrensgemäß Trockenfilmmaterial der Trockenfilmmaterialvorlage derart entfernt, dass eine vorgegebene (Füll-) Höhe der der Trockenfilmmaterialvorlage eingestellt wird. Zweckmäßiger Weise wird hierzu das Rakel, bevorzugt innerhalb des Walzenspalts und/oder in Axialrichtung, verfahren. Beim Verfahren wird Trockenfilmmaterial, insbesondere dasjenige Trockenmaterial, welches über der vorgegebenen Höhe angeordnet ist, vom Rakel aus dem Walzenspalt entfernt. Vorteilhaft ist somit eine definierte Höhe der Trockenfilmmaterialvorlage realisiert.

Zweckmäßig wird das Rakel kontinuierlich, insbesondere zeitlich ununterbrochen, verfahren.

Zweckmäßig rotieren dabei die Walzen kontinuierlich, insbesondere mit konstanter Drehgeschwindigkeit, so dass anhand der Walzen aus dem Trockenfilmmaterial der Trockenfilmmaterialvorlage der Trockenfilm hergestellt wird. Hierbei verbinden sich Partikel der Trockenfilmmaterialvorlage aufgrund der Scher- und/oder Druckbelastung im Spalt.

Für ein Gleichmäßiges Entfernen des überschüssigen Trockenfilmmaterials wird das Rakel zweckmäßig mit konstanter Geschwindigkeit in Axialrichtung und/oder mit konstanter Geschwindigkeit entgegen der Axialrichtung verfahren.

Gemäß einer vorteilhaften Ausgestaltung des Verfahrens wird Trockenfilmmaterial kontinuierlich, vorzugsweise mit konstanter Nachfüllrate, in den Walzenspalt gefördert, also nachgefüllt. Dies resultiert in einer vergleichsweise homogenen Verteilung von Trockenfilmmaterial im Walzenspalt.

Zusätzlich oder alternativ hierzu ist die Nachfüllrate an Trockenfilmmaterial derart eingestellt, dass die vorgegebene Höhe nicht unterschritten wird. Also ist die Nachfüllrate, also die Rate mit welcher das Trockenfilmmaterial der Walzeneinrichtung zugeführt wird, größer als eine Rate an Material, das als Trockenfilm aus der Walzeneinrichtung gefördert wird. Auf diese Weise ist eine Unterfüllung und damit einhergehend eine ungleichmäßige Ausbildung der Trockenschicht vorteilhaft vermieden.

Nachfolgend werden Ausführungsbeispiele der Erfindung anhand einer Zeichnung näher erläutert. Darin zeigen:
- Fig. 1: schematisch in Seitenansicht eine Vorrichtung zur Herstellung eines Trockenfilms, wobei die Vorrichtung ein Rakel sowie eine Walzeneinrichtung mit einer ersten und mit einer Walze umfasst, und wobei für die Walzen jeweils ein Abschirmelement im Walzenspalt angeordnet ist.
- Fig. 2: schematisch die Vorrichtung in einer Draufsicht,
- Fig. 3: schematisch in Seitenansicht eine Variante der Vorrichtung, wobei diese eine Rütteleinheit für die Abschirmelemente aufweist,
- Fig. 4: schematisch in Seitenansicht eine weitere Variante der Vorrichtung, wobei deren Walzen unterschiedliche Durchmesser aufweisen,
- Fig. 5: schematisch in Seitenansicht eine weitere Variante der Vorrichtung, wobei einander zugewandte Seite der Abschirmelemente eben ausgebildet und gegeneinander geneigt sind,
- Fig. 6: schematisch in Seitenansicht eine weitere Variante der Vorrichtung, gemäß welcher die Abschirmelemente asymmetrisch ausgebildet sind, und
- Fig. 7: anhand eines Flussdiagramms ein Verfahren zur Herstellung eines Trockenfilms, bei der anhand des Rakel Trockenfilmmaterial aus dem Walzenspalt entfernt wird.

Einander entsprechende Teile und Größen sind in allen Figuren stets mit gleichen Bezugszeichen versehen.

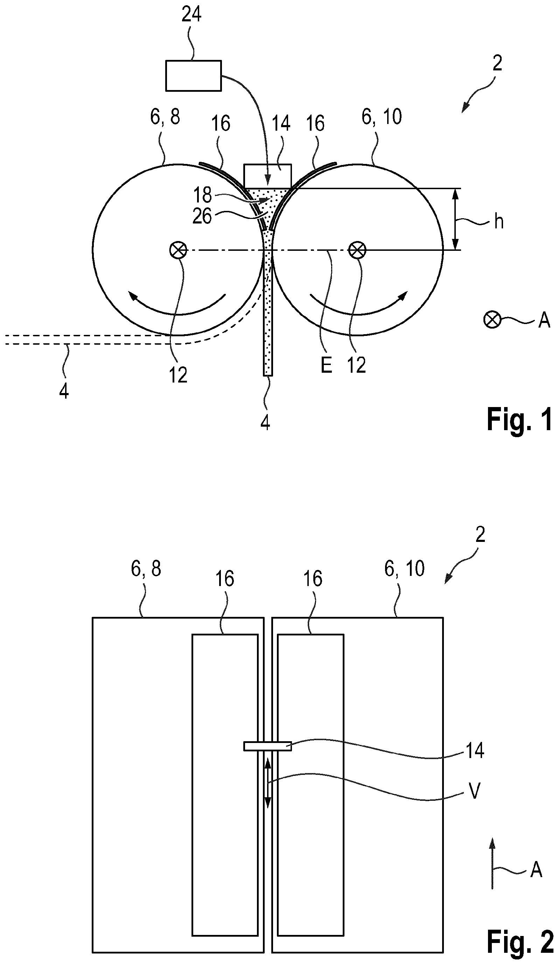

In den Figuren 1 bis 6 sind schematisch Varianten einer Vorrichtung 2 dargestellt, die zur Herstellung eines Trockenfilms 4, insbesondere einer Elektrodenschicht für eine Elektrode einer Lithium-Ionen-Batterie, aus Trockenfilmmaterial eingerichtet ist. Das Trockenfilmmaterial ist dabei ein lösungsmittelfreies und trockenes granulares Medium, beispielsweise ein Pulver.

Allen Varianten ist gemeinsam, dass die Vorrichtung 2 eine Walzeneinrichtung 6 mit einer ersten Walze 8, insbesondere Kalanderwalze, und mit einer zweiten Walze 10, insbesondere Kalanderwalze umfasst, wobei sich die Drehachsen 12 dieser beiden Walzen 8, 10 zueinander parallel und in einer als Axialrichtung A bezeichneten Richtung erstrecken.

Ein Rakel 14 ist zumindest abschnittsweise im Walzenspalt angeordnet. Mit anderen Worten ragt das Rakel 14 in den Raumbereich zwischen den beiden Walzen 8 und 10 ein. Mit noch anderen Worten ist der Abstand des Rakels 14 zu derjenigen Ebene E, welche durch die beiden Drehachsen 12 der Walzen 8, 10 aufgespannt ist, kleiner als der Radius der beiden Walzen 8, 10. Diese Ebene wird im Folgenden auch als Mittelebene E bezeichnet. Dabei ist das Rakel 14 parallel zur Axialrichtung A verfahrbar.

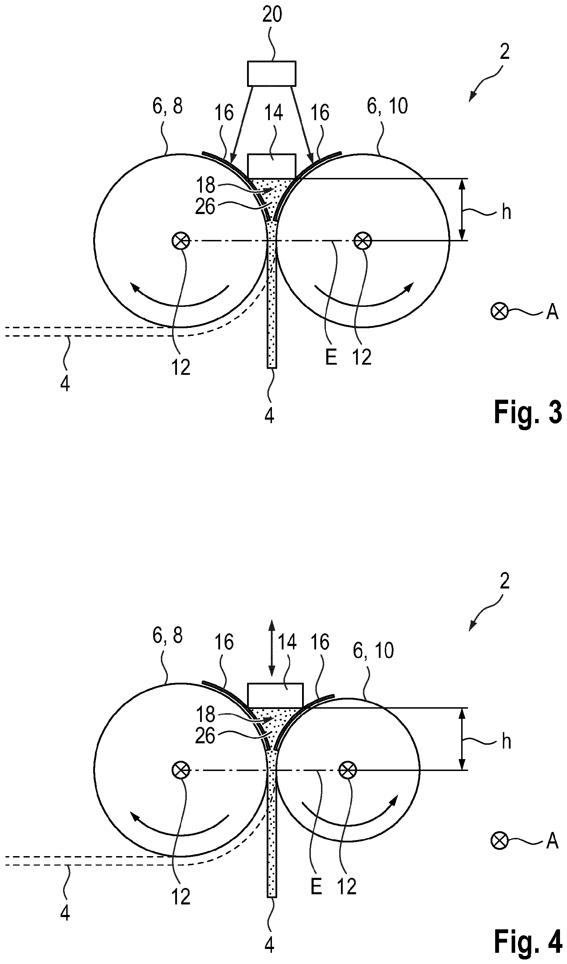

Unter dem Walzenspalt ist hier derjenige Raumbereich zwischen den beiden Walzen 8 und 10 und zwischen denjenigen Ebenen zu verstehen, die parallel zur Mittelebene E sind und deren Abstand zur Mittelebene E gleich dem Radius der beiden Walzen 8, 10 ist. Bei Walzen 8, 10 mit unterschiedlichen Radien (vgl. Fig. 4) ist unter dem Walzenspalt ist derjenige Raumbereich zwischen den beiden Walzen 8 und 10 und zwischen denjenigen Ebenen zu verstehen, die parallel zur Mittelebene E ist und deren Abstand zur Mittelebene E gleich dem kleineren der beiden Radien der Walzen 8, 10 ist.

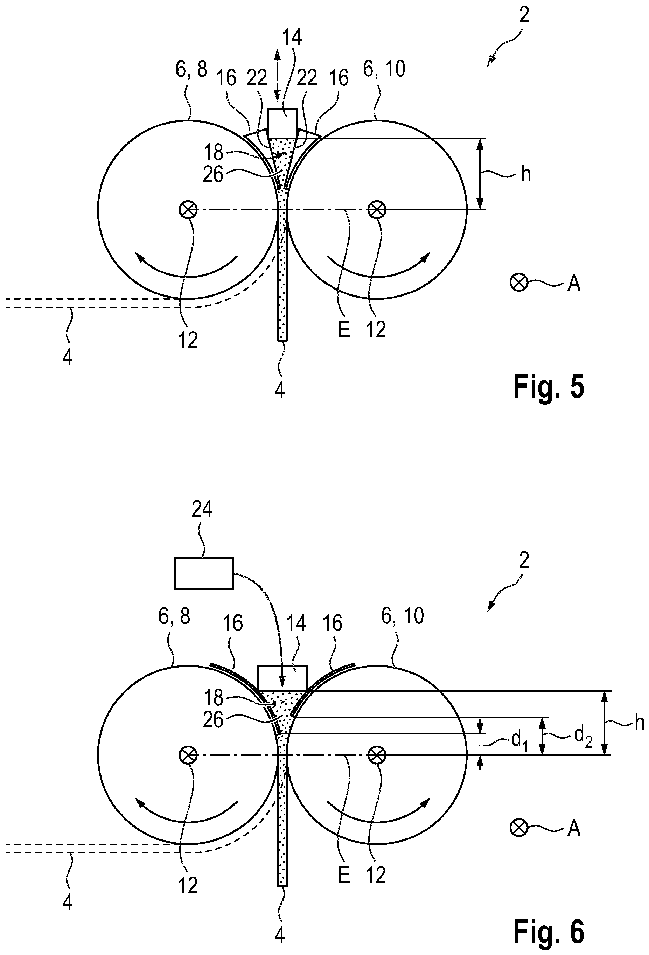

Die Verfahrgeschwindigkeit v des Rakels 14 und/oder ein Abstand des Rakels 14 zu den Walzen, insbesondere zur Mittelebene E, ist einstellbar, was beispielhaft in der Fig. 2 bzw. in den Figuren 4 und 5 anhand eines jeweiligen Doppelpfeils repräsentiert ist.

Die Vorrichtung 2 umfasst ein Abschirmelemente 16 für die erste Walze 8 und ein weiteres Abschirmelement 16 für die zweite Walze 10. Diese sind jeweils umfangsseitig der zugeordneten Walze 8 bzw. 10 und im Walzenspalt, somit zwischen den beiden Walzen 8, 10 angeordnet. Die beiden Abschirmelemente 16 begrenzen einen Aufnahmebereich 18 für das Trockenfilmmaterial. Die Abschirmelemente 16 sind dabei lediglich auf einer Seite des Mittelebene E und beabstandet zu dieser angeordnet.

Gemäß der in der Fig. 3 dargestellten Variante der Vorrichtung 2 umfasst diese eine Rütteleinheit 20, welche mit den beiden Abschirmelementen 16 gekoppelt ist, was anhand eines jeweiligen Pfeils schematisch repräsentiert ist. Die Rütteleinheit 20 ist dazu vorgesehen, die Abschirmelemente 16 zu rütteln, beispielsweise indem diese auf die Abschirmelemente 16 schlägt. Folglich ist Haften des Trockenfilmmaterials an den Abschirmelementen 16 vermieden.

Gemäß den in den Figuren 1 bis 4 und 6 dargestellten Varianten sind die Abschirmelemente 16 jeweils kreisbogenförmig ausgebildet und konzentrisch zur jeweils zugeordneten Walze 8 bzw. 10 angeordnet. Auf diese Weise ist der Aufnahmebereich 18 vergleichsweise groß ausgebildet

Bei der in der Fig. 4 dargestellten Variante der Vorrichtung 2 weisen die beiden Walzen 8, 10 unterschiedliche Durchmesser auf.

Bei der in der Fig. 5 dargestellten Variante der Vorrichtung 2 sind die einander zugewandten Seiten 22, also die den Aufnahmebereich 18 begrenzenden Seiten 22, eben und zueinander geneigt. Folglich ist ein sich zur Mittelebene hin verjüngender Aufnahmebereich 18 gebildet. Die Seiten bilden dabei einen vergleichsweise großen Winkel zur Mittelebene E, so dass ein Haften des Trockenfilmmaterials am jeweiligen Abschirmelement 16 und/oder die Bildung einer toten Zone vermieden ist.

Die den Walzen 8 bzw. 10 zugewandte Seite des jeweiligen Abschirmelements 16 ist kreisbogenförmig ausgebildet und konzentrisch zur jeweils zugeordneten Walze 8 bzw. 10 angeordnet. Die Abschirmelemente 16 erstreckt sich also zwischen dem Aufnahmebereich 18 und der jeweiligen Walze 8 bzw. 10. Folglich ist ein unerwünschtes Eindringen von Trockenfilmmaterial zwischen das jeweilige Abschirmelement 16 und der jeweiligen Walze 8, 10 vermieden.

Bei der in der Fig. 6 dargestellten Variante der Vorrichtung 2 sind die beiden Abschirmelemente 16 derart im Walzenspalt angeordnet, dass der Abstand d₁ des der ersten Walze 8 zugeordneten Abschirmelements 16 zur Mittelebene E kleiner ist der Abstand d₂ des der zweiten Walze 10 zugeordneten Abschirmelements 16 zur Mittelebene E.

Die Vorrichtung 2 gemäß aller Varianten weist weiterhin einen Materialförderer 24 auf, der zum Zwecke einer besseren Übersicht lediglich in der Fig. 1 und der Fig. 6 dargestellt ist. Der Materialförderers 24 dient dazu, Trockenfilmmaterial in den Aufnahmebereich 18 zwischen den Abschirmelementen 16 zu fördern.

Das sich im Aufnahmebereich ansammelnde Trockenfilmmaterial wird als Trockenfilmmaterialvorlage bezeichnet und ist in den Figuren mit dem Bezugszeichen 26 versehen. In den Figuren ist das Trockenfilmmaterial der Trockenfilmvorlage 26 sowie das anhand der Walzen 8, 10 zum Trockenfilm verarbeitete Trockenfilmmaterial flächig punktiert dargestellt.

Das Rakel 14 dient zum Einstellen einer definierten Höhe h der Trockenfilmmaterialvorlage 26, also der Ausdehnung der Trockenfilmmaterialvorlage 26 ab der Mittelebene E. Hierzu verfährt das Rakel 14 und entfernt Trockenfilmmaterial der Trockenfilmmaterialvorlage 26. Auf diese Weise ist eine Überfüllung und damit einhergehen eine Vorverdichtung des Trockenfilmmaterials in der Trockenfilmmaterialvorlage 26 vermieden.

Zweckmäßig ist dabei die Vorrichtung 2 derart orientiert, dass die Trockenfilmvorlage 26 bezüglich der Richtung der Schwerkraft über der Mittelebene E angeordnet ist.

Die der Mittelebene E zugewandte Kante des Rakels 14 ist in den Figuren gerade dargestellt. Gemäß nicht weiter dargestellten Varianten, ist die Kante gebogen ausgebildet. Optional ist das Rakel 14 in nicht näher dargestellter Weise gegen die Axialrichtung A neigbar.

Bei allen Varianten der Vorrichtung 2 sind die erste Walze 8 und/oder die zweite Walze 10 optional beheizbar.

Bei allen Varianten der Vorrichtung 2 ist der Betrag der Umdrehungsgeschwindigkeit (Winkelgeschwindigkeit, Drehzahl) der beiden Walzen 8, 10 entweder gleich oder unterschiedlich zueinander gewählt. Beispielsweise ist eine Rotation der Walzen 8 und 10 mit gleichem Betrag der Umdrehungsgeschwindigkeit und bei gleichem Durchmesser besonders dazu geeignet, einen sogenannten freistehenden Trockenfilm 4 zu erzeugen, also ist der anhand der Walzen 8, 10 hergestellte Trockenfilm 4 nicht an den Walzen 8, 10 geführt.

Alternativ ist bei unterschiedlichen Umdrehungsgeschwindigkeiten und/oder bei gleicher Umdrehungsgeschwindigkeit, aber unterschiedlichen Durchmessern der Walzen 8, 10 eine Scherkrafteinwirkung auf das Trockenfilmmaterial erhöht. Zudem ist diese Variante besonders für einen sogenannten walzengetragenen Trockenfilm 4 geeignet, bei dem der hergestellte Trockenfilm 4 an einer der beiden Walzen 8, 10 geführt, und somit umgelenkt wird. Der walzengetragene Trockenfilm 4 ist in den Figuren strichliniert dargestellt.

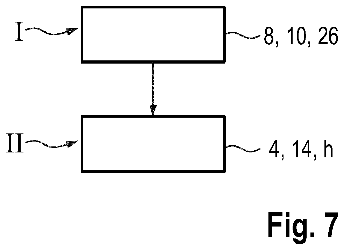

In der Fig. 7 ist ein Flussidagramm gezeigt, das ein Verfahren zur Herstellung des Trockenfilms 4 repräsentiert. Das Verfahren wird insbesondere anhand der Vorrichtung 2 in einer der oben dargestellten Varianten durchgeführt.

In einem ersten Schritt I wird Trockenfilmmaterial, insbesondere anhand des Materialförderers 24, zwischen die erste und die zweite Walze 8, 10, insbesondere in den zwischen den Abschirmelementen 16 gebildeten Aufnahmebereich 18, gefördert. Hierbei sammelt sich das Trockenfilmmaterial unter Bildung der Trockenfilmmaterialvorlage 26 an.

In einem zweiten Schritt II wird anhand des Rakels 14 Trockenfilmmaterial von der Trockenfilmmaterialvorlage 26 entfernt, so dass die vorgegebene Höhe h der Trockenfilmmaterialvorlage 26 eingestellt wird. Insbesondere wird hierzu das Rakel 14 im Walzenspalt, vorzugsweise in und/oder entgegen der Axialrichtung verfahren. Das Rakel 14 nimmt dabei Trockenfilmmaterial mit, mit anderen Worten streift dies von der Trockenfilmmaterialvorlage 26 ab, so dass die Trockenfilmmaterialvorlage mit der Höhe h verbleibt.

Die beiden werden Walzen 8, 10 werden mit, zweckmäßiger Weise konstanter, Drehgeschwindigkeit rotiert. Dabei wird aus dem Trockenfilmmaterial der Trockenfilmmaterialvorlage 26 der Trockenfilm 4 erzeugt, also hergestellt.

Weiterhin wird zweckmäßiger Weise das Trockenfilmmaterial, vorzugsweise kontinuierlich, als ununterbrochen, und/oder vorzugsweise mit konstanter Nachfüllrate (Förderrate) zwischen die Walzen 8, 10 gefördert.

Weiter bevorzugt ist die Nachfüllrate derart eingestellt, dass eine Unterfüllung vermieden ist. Also ist die Nachfüllrate derart eingestellt, dass die Höhe h der Trockenfilmvorlage 26 aufgrund des Materialverbrauchs für die Herstellung des Trockenfilms 4 und/oder aufgrund des Entfernen des Trockenfilmmaterials anhand des Rakels 14 nicht unterschritten wird.

Die Erfindung ist nicht auf die vorstehend beschriebenen Ausführungsbeispiele beschränkt. Vielmehr können hieraus im Rahmen der Ansprüche auch andere Varianten der Erfindung vom Fachmann abgeleitet werden, ohne den Gegenstand der Erfindung zu verlassen. Insbesondere sind ferner alle im Zusammenhang mit den Ausführungsbeispielen und/oder in den Ansprüchen beschriebenen Einzelmerkmale auch auf andere Weise miteinander kombinierbar, ohne den Gegenstand der Erfindung zu verlassen.

### Bezugszeichenliste

- 2: Vorrichtung
- 4: Trockenfilm / Elektrodenschicht
- 6: Walzeneinrichtung
- 8: erste Walze
- 10: zweite Walze
- 12: Drehachse der Walze
- 14: Rakel
- 16: Abschirmelement
- 18: Aufnahmebereich
- 20: Rütteleinheit
- 22: Seite des Abschirmelements
- 24: Materialförderer
- 26: Trockenfilmmaterialvorlage

- A: Axialrichtung
- d₁, d₂: Abstand
- h: Höhe der Trockenfilmvorlage
- E: Ebene
- V: Verfahrgeschwindigkeit

- I II: Einstellen der Höhe der Trockenfilmmaterialvorlage

## Patentansprüche

1. Vorrichtung (2) zur Herstellung eines Trockenfilms (4), insbesondere einer Elektrodenschicht, aufweisend
- eine Walzeneinrichtung (6) mit einer ersten Walze (8) und mit einer zweiten Walze (10) zur Bildung des Trockenfilms (4) aus einer Trockenfilmmaterialvorlage (26), sowie
- ein Rakel (14), welches zum Einstellen einer Höhe (h) der Trockenfilmmaterialvorlage (26) verfahrbar ist.

2. Vorrichtung (2) nach Anspruch 1,
**dadurch gekennzeichnet,**
**dass** jeweils Abschirmelement (16) für die erste Walze (8) und für die zweite Walze (10) vorgesehen ist, wobei die Abschirmelemente (16) zwischen der ersten Walze (8) und der zweiten Walze (10) angeordnet sind, und wobei anhand der Abschirmelemente (16) ein Aufnahmebereich (18) für die Trockenfilmmaterialvorlage (26) gebildet ist.

3. Vorrichtung (2) nach Anspruch 2,
**gekennzeichnet durch**
eine Rütteleinheit (20) für die Abschirmelemente (16).

4. Vorrichtung (2) nach Anspruch 2 oder 3,
**dadurch gekennzeichnet,**
**dass** die Abschirmelemente (16) kreisbogenförmig ausgebildet sind.

5. Vorrichtung (2) nach einem der Ansprüche 2 bis 4,
**dadurch gekennzeichnet,**
**dass** die einander zugewandten Seiten (22) der Abschirmelemente (16) eben und/oder zueinander geneigt sind.

6. Vorrichtung (2) nach einem der Ansprüche 2 bis 5,
**dadurch gekennzeichnet,**
**dass** die Abschirmelemente (16) unterschiedliche Abstände (d₁, d₂) zur durch die Drehachsen (12) der ersten und der zweiten Walze (8, 10) aufgespannten Ebene (E) aufweist.

7. Vorrichtung (2) nach einem der Ansprüche 1 bis 6,
**dadurch gekennzeichnet,**
**dass** die Verfahrgeschwindigkeit (v) des Rakels (14) und/oder ein Abstand des Rakels (14) zu den Walzen (8,10) der Walzeneinrichtung (6) einstellbar ist.

8. Vorrichtung (2) nach einem der Ansprüche 1 bis 7,
**dadurch gekennzeichnet,**
- **dass** Rakel (14) in einer Richtung parallel zur Drehachse (12) der ersten Walze (8) und/oder der zweiten Walze (10) verfahrbar ist, und/oder
- **dass** das Rakel (14) in einem zwischen der ersten Walze (8) und der zweiten Walze (10) gebildeten Walzenspalt (WS) verfahrbar ist.

9. Verfahren zur Herstellung eines Trockenfilms (4), insbesondere anhand einer Vorrichtung gemäß einem der Ansprüche 1 bis 8,
- wobei Trockenfilmmaterial unter Bildung einer Trockenfilmmaterialvorlage (26) zwischen eine erste Walze (8) und eine zweite Walze (10) gefördert wird,
- wobei anhand eines Rakels (14) Trockenfilmmaterial von der Trockenfilmmaterialvorlage (26) entfernt wird, so dass eine vorgegebene Höhe (h) der Trockenfilmmaterialvorlage (26) eingestellt wird.

10. Verfahren nach Anspruch 9,
**dadurch gekennzeichnet,**
- **dass** Trockenfilmmaterial kontinuierlich nachgefüllt wird, und/oder
- **dass** wobei eine Nachfüllrate an Trockenfilmmaterials derart eingestellt ist, dass die vorgegebene Höhe (h) der Trockenfilmmaterialvorlage (26) nicht unterschritten wird.
